Europäisches Patentamt

European Patent Office

Office européen des brevets

(19)

(11) **EP 1 406 449 A2**

(12) **EUROPEAN PATENT APPLICATION**

(43) Date of publication:
**07.04.2004   Bulletin 2004/15**

(51) Int Cl.⁷: $H04N\ 7/26$, $H04N\ 7/50$

(21) Application number: **03255366.1**

(22) Date of filing: **29.08.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br> • **Park, Jeong-hoon**<br>  **Gwanak-gu Seoul (KR)**<br> • **Lee, Yung-Iyul**<br>  **Songpa-gu Seoul (KR)**<br> • **Kim, Yong-je 503-105 Samsung 5-cha Apt.**<br>  **Yongi-si Gyeonggi-do (KR)** |
| (30) Priority: **31.08.2002  KR 2002052286** | |
| (71) Applicant: **SAMSUNG ELECTRONICS CO., LTD.**<br>**Suwon-City, Kyungki-do (KR)** | (74) Representative: **Robinson, Ian Michael**<br>**Appleyard Lees,**<br>**15 Clare Road**<br>**Halifax HX1 2HY (GB)** |

(54) **Interpolation apparatus and method for motion compensation**

(57)     An interpolation method and apparatus for motion vector compensation are provided. The interpolation method includes calculating a horizontal sum of values of a plurality of half-pixels adjacent to or near a predetermined quarter-pixel in the horizontal direction by giving predetermined weights to each of the half-pixels, and adding the results; calculating a vertical sum of values of a second plurality of half-pixels adjacent to or near the quarter-pixel in the vertical direction by giving predetermined weights to each of the half-pixels, and adding the results; and calculating an integer value of the quarter-pixel value using the vertical and horizontal sums.

FIG. 2

**EP 1 406 449 A2**

**Description**

The present invention relates to motion vector compensation, and more particularly, to an interpolation method and apparatus for improving the accuracy of motion vector compensation.

According to video coding standards such as MPEG-1, MPEG-2, MPEG-4, and H.264, a target picture is encoded using either a P-picture encoding method or a B-picture encoding method and motion vector compensation is performed on the encoding result. That is, a target picture is encoded by referring to a previous picture in the P-picture encoding method and by referring to both previous and future pictures in the P-picture encoding method. In particular, the MPEG-4 and H.264 standards provide that motion vector compensation is performed in units of macro blocks or in units of blocks that are sub-divisions of a macro block. Also, motion vector compensation is rendered after increasing the precision of data by performing interpolation on a block, which consists of integer pixels, to obtain half-pixels, quarter-pixels, or one-eighth pixels.

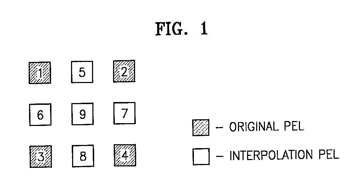

Figure 1 is a diagram explaining interpolation. Referring to Figure 1, shaded boxes 1 through 4 denote original pixels, i.e., integer pixels, and empty boxes 5 through 9 denote interpolation pixels. The empty boxes 5 through 8, i.e., the interpolation pixels 5 through 8, indicate half-pixels and the other empty box 9 indicates a quarter-pixel. Half-pixels are obtained based on adjacent integer pixels or adjacent half-pixels in the vertical or horizontal direction. For instance, half-pixels 5 and 8 are obtained from integer pixels 1 and 2, and integer pixels 3 and 4, respectively. Also, half-pixels 6 and 7 are obtained from integer pixels 1 and 3, and integer pixels 2 and 4, respectively. Quarter-pixel 9 is obtained either from half-pixels 5 and 8, or from half-pixels 6 and 7. Here, the number of integer pixels is set to 4 for convenience but the number of pixels used in interpolation is not limited. For instance, half-pixel 5 may be obtained from other integer pixels adjacent to pixels 1 and 2 in the horizontal direction, as well as integer pixels 1 and 2. An interpolation pixel is expressed with an integer within the same range of the integers of related original pixels. If the original pixels are expressed with integers between 0 and 255, an interpolation pixel is also expressed with an integer between 0 and 255.

In general, the more the number of pixels of a certain pixel block is increased by interpolation, the greater the precision of motion vector compensation. However, this is not always true. An interpolation algorithm uses rounding off, rounding up, or rounding down, to obtain interpolation pixels having integer values so pixel values obtained with the interpolation algorithm are more likely to include errors.

Therefore, the interpolation algorithm needs to be designed to suppress accumulation of errors as much as possible. To this end, interpolation pixel values may be calculated by using any one of rounding off, rounding up, or rounding down, or some combination of the above at various times, in order to offset the errors.

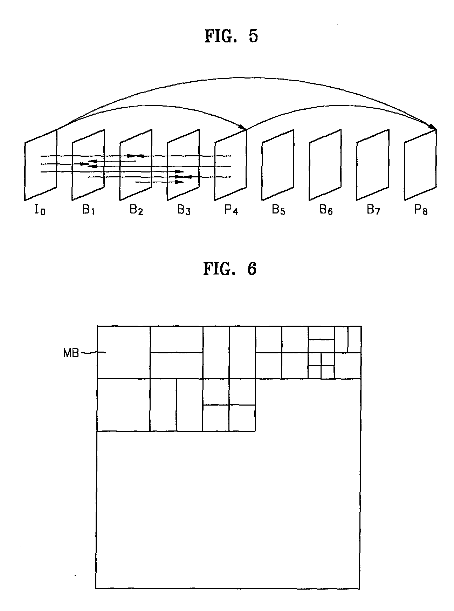

Also, the interpolation algorithm must have consistency. If interpolation pixel values vary according to the type of a process to which the algorithm is applied or an order of processing the algorithm, motion vector compensation needs to be performed differently, for these different types of values. In this case, mismatch between an encoder and a decoder is likely to increase. An increase in the mismatch may result in reduction of the quality of an image. Figure 5 illustrates an example of an algorithm for obtaining quarter-pixel 9, according to H.264 standard (Draft ITU-T Rec. H.264(2002 E)).

According to the present invention there is provided an apparatus and method as set forth in the appended claims. Preferred features of the invention will be apparent from the dependent claims, and the description which follows.

The present invention provides an interpolation method and apparatus using an interpolation algorithm which carries out motion vector compensation consistently.

The present invention also provides an interpolation method and apparatus using an interpolation algorithm which increase the efficiency of motion vector compensation.

According to an aspect of the present invention, there is provided an interpolation method comprising: (a) calculating a horizontal sum of values of a plurality of half-pixels adjacent to or near a predetermined quarter-pixel in the horizontal direction by giving predetermined weights to the half-pixels, respectively, and adding the weighted half-pixels together; (b) calculating a vertical sum of values of a plurality of half-pixels adjacent to or near the quarter-pixel in the vertical direction by giving predetermined weights to the half-pixels, respectively, and adding the weighted half-pixels together; and (c) calculating an integer value of the quarter-pixel value using the vertical and horizontal sums.

Here, during (a) and (b), a total number of the half-pixels used when calculating each of the vertical and horizontal sums is an even number. It is preferable that the sum of the given weights is $2^n$.

According to another aspect of the present invention, there is provided an interpolation method comprising: calculating a horizontal sum of values of a plurality of half-pixels adjacent to a predetermined quarter-pixel in the horizontal direction by giving predetermined weights to the half-pixels, respectively, and adding the results together; calculating a horizontal average of the half-pixels by computing the average of the half-pixels using the horizontal sum and making their average into an integer; calculating a vertical sum of the values of a plurality of half-pixels adjacent to the quarter-pixel in the vertical direction by giving predetermined weights to the half-pixels, respectively, and adding the results together; calculating a vertical average of the half-pixels by computing the average of the half-pixels using the vertical sum and making their average into an integer; and calculating the value of the quarter-pixel by calculating the average of the horizontal and vertical averages and making their average into an integer.

According to yet another aspect of the present invention, there is provided a motion compensation apparatus comprising: an interpolation unit which calculates a horizontal sum by giving weights to a plurality of half-pixels adjacent to a predetermined quarter-pixel in the horizontal direction and adding the results together, calculates a vertical sum by giving weights to a plurality of half-pixels adjacent to the quarter-pixel in the vertical direction and adding the results together, and calculates an integer value of the quarter-pixel using the vertical and horizontal sums; and a motion compensator which performs motion vector compensation on a pixel block that is interpolated by the interpolation unit.

According to still another aspect of the present invention, there is provided a motion compensation apparatus comprising: an interpolation unit which calculates a horizontal sum of a plurality of half-pixels which are adjacent to a predetermined quarter-pixel in the horizontal direction by giving weights to the half-pixels and adding the results together, calculates a horizontal average of the half-pixels using the horizontal sum, makes the horizontal average into an integer, calculates a vertical sum of a plurality of half-pixels which are adjacent to the quarter-pixel in the vertical direction by giving weights to the half-pixels and adding the results together, calculates a vertical average of the half-pixels using the vertical sum, makes the vertical average into an integer, calculates the average of the vertical and horizontal averages, makes their average into an integer, and determines the integer as the value of the quarter-pixel; and a motion compensator which performs motion vector compensation on a pixel block that is interpolated by the interpolation unit.

For a better understanding of the invention, and to show how embodiments of the same may be carried into effect, reference will now be made, by way of example, to the accompanying diagrammatic drawings in which:

Figure 1 is a diagram explaining interpolation;

Figure 2 is a block diagram of an encoder including a motion compensator according to a preferred embodiment of the present invention;

Figure 3 is an example of image data input to the encoder of Figure 2;

Figure 4 is a block diagram of a decoder including a motion compensator according to a preferred embodiment of the present invention;

Figure 5 is a diagram illustrating a multiple reference method;

Figure 6 is a diagram illustrating motion vector compensation blocks which are units of measurement for motion vector compensation;

Figure 7 is a diagram illustrating interpolation performed by an interpolation unit according to a preferred embodiment of the present invention; and

Figure 8 is a diagram illustrating interpolation performed by an interpolation unit according to another embodiment of the present invention.

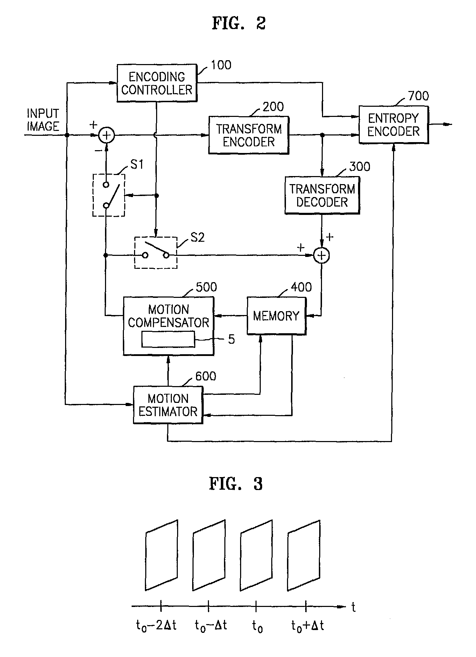

Figure 2 is a block diagram of an encoder including a motion compensator according to a preferred embodiment of the present invention. Referring to Figure 2, the encoder adopts a multiple reference method to encode image data and includes an encoding controller 100, a transform encoder 200, a transform decoder 300, a memory 400, a motion compensator 500, a motion estimator 600, and an entropy encoder 700. The multiple reference method will be explained later.

Input data consists of frames input from a camera, or of blocks that are sub-divisions of a frame having predetermined sizes. A frame may be a progressive scanned frame that is obtained using a progressive scanning method, and may be a field or an interlaced scanned frame that is obtained using an interlaced scanning method. In this disclosure, image data is equivalent to a picture which consists of progressive scanned frames, interlaced scanned frames, fields, and blocks.

When image data is input to the encoding controller 100, the encoding controller 100 checks a coding type (e.g., intra coding or inter coding) of the image data based on the characteristics of the input image data or a predetermined operational object that a user desires, so as to determine whether motion vector compensation will be performed on the image data. Then, the encoding controller 100 outputs a control signal corresponding to the checking result to a first switch S1. For motion vector compensation, the first switch S1 is switched on to obtain previous or future image data. However, if it is determined that motion vector compensation will not be performed, the first switch *S*1 is switched off because the previous or future image data is not required. When the first switch *S*1 is switched on, the difference data between the input image data and the previous or future image data is input together with the input image data to the transform encoder 200. Otherwise, only the input image data is input to the transform encoder 200.

The transform encoder 200 performs transform encoding on the input image data to obtain transform coefficients, and quantizes the transform coefficients according to predetermined quantization steps to obtain 2-dimensional (2D) data $N \times M$ that consists of the quantized transform coefficients. Here, discrete cosine transform (DCT) may be used and the quantization is carried out according to predetermined quantization steps.

Meanwhile, the image data, which is input to and encoded by the transform encoder 200, may be used as reference data for motion vector compensation regarding the previous or future input image data. Therefore, the transform decoder 300 performs inverse quantization and transforms encoding, which are the inverse of the quantization and transform encoding performed by the transform encoder 200, on the image data to obtain transform coefficients. The obtained coefficients are stored in the memory 400. If data output from the transform decoder 300 is difference image data, the encoding controller 100 switches on a second switch *S2* so that the difference image data is added together with an output of the motion compensator 500 and the addition result is stored in the memory 400.

The motion estimator 600 compares the input image data with the data stored in the memory 400 in order to detect data that is the most similar to the input data, compares the detected data with the input data, and outputs a motion vector (MV) based on the comparison result. Here, the MV is obtained by referring to at least one picture. Alternatively, the MV may be obtained by referring to a plurality of previous and/or future pictures. When the MV is sent to the memory 400, the memory 400 outputs data corresponding to the MV to the motion compensator 500, and the motion compensator 500 produces and outputs a motion vector compensation value based on the input data in relation to image data to be encoded.

The entropy encoder 700 receives the quantized transform coefficients output from the transform encoder 200, the data related to the MV, which is output from the motion estimator 600, and information regarding a coding type, quantization steps, and decoding output from the encoding controller 100. The received transform coefficients and information are encoded and then output as a bit stream.

The motion compensator 500 according to a preferred embodiment of the present invention compensates for an error of a motion vector regarding image data, and includes an interpolation unit 5. The interpolation unit 5 performs interpolation on image data, which is needed when producing the motion vector compensation value by the motion compensator 500, to increase the resolution of the image data. The interpolation (or an interpolation algorithm) performed by the interpolation unit 5 will be described later.

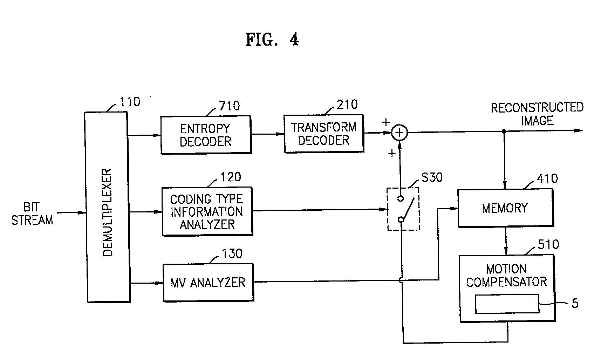

Figure 4 is a block diagram of a decoder including a motion compensator according to a preferred embodiment of the present invention. Referring to Figure 4, the decoder is an apparatus for decoding a bit stream encoded by the encoder of Figure 2. The decoder includes a demultiplexer 110 which demultiplexes a bit stream, a coding type information analyzer 120, a motion vector (MV) analyzer 130 which analyzes a MV according to the present invention, a transform decoder 210, a memory 410, a motion compensator 510, and an entropy decoder 710.

A bit stream is demultiplexed by the demultiplexer 110 to become transform coefficients, and information, such as information regarding a MV and coding type, which are entropy-encoded and quantized. The entropy decoder 710 entropy decodes the entropy-encoded transform coefficients and outputs the result as quantized transform coefficients. The transform decoder 210 performs transform decoding on the quantized transform coefficients, that is, an inversion of the transformation performed by the transform encoder of Figure 3. For instance, if the transform encoder 200 performs DCT, the transform decoder 210 reconstructs the original image data by performing inverse DCT (IDCT) on the quantized transform coefficients. The reconstructed image data is stored in the memory 400 to be used for motion vector compensation.

The coding type information analyzer 120 determines the coding type of the image data and switches on a third switch *S30* when the coding type is an inter type that needs motion vector compensation. In this case, data output from the transform decoder 210 is added with a motion vector compensation value output from the motion compensator 510. The sum is the reconstructed image data. The MV analyzer 130 determines a location indicated by the MV based on the information regarding the MV and the motion compensator 510 produces and outputs the motion vector compensation value using reference image data indicated by the MV.

The motion compensator 510 according to a preferred embodiment compensates for the motion of image data and includes an interpolation unit 5. The interpolation unit 5 performs interpolation on the image data, which is needed when producing the motion vector compensation value by the motion compensator 510, so as to increase the resolution of the image data. The interpolation (or an interpolation algorithm) performed by the interpolation unit 5 will be described later.

Figure 5 is a diagram illustrating a multiple reference method. Referring to Figure 5, a picture $I_0$ denotes an intra picture that is obtained without referring to another picture. Pictures $B_2$ through $B_7$ denote bi-directional predictive pictures that are obtained by referring to two or more different pictures, and a picture $P_8$ denotes a predictive picture that is obtained by referring to only the picture $I_0$. In Figure 5, arrows indicate the relationship among the pictures used in decoding. For instance, the picture $B_2$ is subordinate to the pictures $I_0$ and $P_4$, and the picture $B_3$ is subordinate to the pictures $I_0$, $P_4$, $B_1$, and $B_2$. For this reason, although the pictures are displayed in the order of $I_0$, $B_1$, $B_2$, $B_3$, and $P_4$, the pictures are transmitted in the order of $I_0$, $P_4$, $B_1$, $B_2$, and $B_3$. When image data is encoded using the encoder of Figure 2, picture $B_x$ is produced by referring to a plurality of pictures. In other words, in the encoder of Figure 2 and the decoder of Figure 4, MVs are produced using a bi-directional predictive method and/or at least one of a forward predictive method, a backward predictive method, and a direct predictive method. In the bi-directional predictive method, the two reference pictures may be two previous pictures or two future pictures or a previous and a future picture.

Figure 6 is a diagram illustrating motion vector compensation blocks which are units of measurement for motion vector compensation. Referring to Figure 6, a picture consists of a plurality of motion vector compensation blocks. The motion vector compensation blocks are of several types, including 16x16 macro blocks (MBs), 16x8 MBs that are halves of the 16x16 MBs in the horizontal direction, 8x16 MBs that are halves of the 16x16 MBs in the vertical direction, 8x8 MBs that are halves of the 8x16 or 16x8 MBs in the horizontal or vertical direction, 8x4 MBs or 4x8 MBs that are halves of the 8x8 MBs in the horizontal or vertical direction, and 4x4 MBs that are halves of the 8x4 or 4x8 MBs in the vertical or horizontal direction.

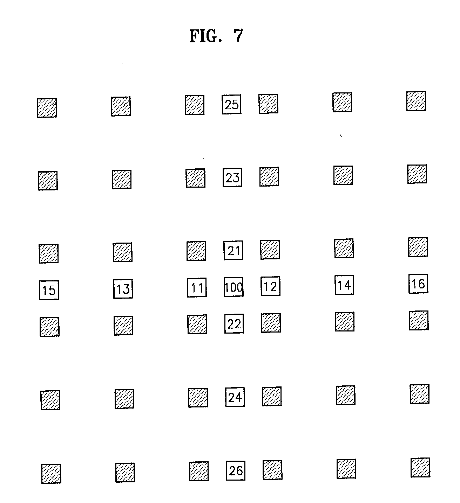

Figure 7 is a diagram illustrating interpolation performed by an interpolation unit according to a preferred embodiment of the present invention. In particular, Figure 7 shows pixels comprising motion vector compensation blocks. Shaded boxes denote integer pixels and empty boxes denote interpolation pixels. The interpolation unit measures the value of quarter-pixel 100 using one of the following methods:

Method 1:

1-(a): First, the horizontal sum *Sum_h_100* of the values of a plurality of half-pixels adjacent to quarter-pixel 100 in the horizontal direction is calculated by assigning predetermined weights to the values, respectively, and then adding the results together. Here, the range of the plurality of half-pixels which are used when calculating the value of quarter-pixel 100 is not limited but the total number of the half-pixels must be an even number. For instance, half-pixels 11 and 12 are selected if the number of half-pixels is two, half-pixels 13 through 14 are selected in addition to half-pixels 11 and 12, if the number of half-pixels is four, and half-pixels 11 through 16 are additionally selected if the number of half-pixels is six. The weights may be determined such that (i) the absolute value of a weight given to a half-pixel which is closer to quarter-pixel 100 is larger than that of a weight given to a half-pixel which is farther away from quarter-pixel 100 and (ii) the absolute values of half-pixels which have the same distance from quarter-pixel 100 are the same. The sum of all of the given weights is $2^n$.

For instance, when six half-pixels are used and weights given to the half-pixels are *a, b, c, d, e,* and *f,* the horizontal sum *Sum_h_100* is calculated by [(a*half-pixel 15)+ (b*half-pixel 13)+ (c*half-pixel 11)+ (d*half-pixel 12)+ (e*half-pixel 14)+ (f*half-pixel 16)]. Here, the sum of $a+b+c+d+e+f = 2^n$.

1-(b): The vertical sum *Sum_v_100* of the values of a plurality of half-pixels, adjacent to quarter-pixel 100 in the vertical direction, is calculated by providing predetermined weights to the values, respectively, and then adding the results together. The range of the half-pixels is not limited as when calculating the horizontal sum *Sum_h_100,* but it is preferable that the number of half-pixels used to calculate the horizontal sum *Sum_h_100* is the same as that of half-pixels used to calculate the vertical sum *Sum_v_100.* Also, it is preferable that the weights are determined as when calculating the horizontal sum *Sum_h_100.*

For instance, six half-pixels are selected and weights given to the half-pixels are *a, b, c, d, e,* and *f,* the vertical sum *Sum_v_100* is calculated by [(a*half-pixel 25)+ (b*half-pixel 23)+ (c*half-pixel 21)+ (d*half-pixel 22)+ (e*half-pixel 24)+ (f*half-pixel 26)].

1-(c): The value of quarter-pixel 100, which is an integer value, is computed using the horizontal sum *Sum_h_100* and the vertical sum *Sum_v_100.* In detail, the value of quarter-pixel 100 is obtained by adding the horizontal sum *Sum_h_100* and the vertical sum *Sum_v_100* together and calculating their average *M_hv* as follows:

$$M\_hv = (Sum\_h\_100 + Sum\_v\_100)/[2*(a+b+c+d+e+f)] \qquad (1)$$

Next, the average *M_hv* is made into an integer by rounding up, rounding down, or rounding off. In this case, rounding off randomizes and minimizes errors. The integer is the value of quarter-pixel 100. If the integer does not fall within the same range as the original pixel, the integer is mapped into an integer having the same range, using an available mapping algorithm. For instance, when the original pixel is expressed with an integer within a range from 0 to 255, the value of an obtained quarter-pixel must be an integer within the same range.

Method 2:

2-(a): First, the horizontal sum *Sum_h_100* of the values of a plurality of half-pixels adjacent to quarter-pixel 100 in the horizontal direction is calculated by assigning predetermined weights to the plurality of half-pixels, respectively, and adding the results together. The range of the half-pixels is not limited. For instance, when the number of the half-pixels is two, half-pixels 11 and 12 are selected. When the number of the half-pixels is four, half-pixels 13 through 14 are selected in addition to the half-pixels 11 and 12. If the number of the half-pixels is six, half-pixels 11 through 16 are additionally selected. The weights may be determined such that (i) the absolute value of a weight given to a half-pixel which is closer to quarter-pixel 100 is larger than that of a weight given to a half-pixel which is farther away from quarter-pixel 100; and (ii) the absolute values of half-pixels which have the same distance from quarter-pixel 100 are the same.

For instance, when six half-pixels are selected and weights given to the half-pixels are *a, b, c, d, e,* and *f,* the horizontal sum *Sum_h_100* is calculated by [(a*half-pixel 15)+ (b*half-pixel 13)+ (c*half-pixel 11)+ (d*half-pixel 12)+ (e*half-pixel 14)+ (f*half-pixel 16)].

2-(b): The horizontal average *integer_M_h* of the half-pixels is obtained by calculating the average *M_h* of the horizontal sum *Sum_h_100* and making the average into an integer.

More specifically, the average *M_h* of the horizontal sum *Sum_ h_100* is calculated in consideration of the weights given to the plurality of half-pixels, as follows:

$$M\_h = (Sum\_h\_100)/(a+b+c+d+e+f) \tag{2}$$

Next, the average *M_h* is made into an integer by rounding up, rounding down, or rounding off. Rounding off randomizes and minimizes errors. The integer is the horizontal average *integer_M_h.*

2-(c): The vertical sum *Sum_v_100* of the values of a plurality of half-pixels adjacent to quarter-pixel 100 in the vertical direction is calculated by assigning predetermined weights to the values and then adding the results together. The range of the half-pixels is not limited as when calculating the horizontal sum *Sum_h_100,* but it is preferable that the number of half-pixels related to the horizontal sum *Sum_h_100* is the same as that of half-pixels related to the vertical sum *Sum_v_100.* Also, it is preferable that the weights are determined as when calculating the horizontal sum *Sum_h_100.*

For instance, when six half-pixels are selected and weights given to the half-pixels are a, b, c, d, e, and f, the vertical sum *Sum_v_100* is calculated by [(a*half-pixel 25)+ (b*half-pixel 23)+ (c*half-pixel 21)+ (d*half-pixel 22)+ (e*half-pixel 24)+ (f*half-pixel 26)].

2-(d): The vertical average *integer_M_v* of the half-pixels is obtained by calculating the average *M_v* of the vertical sum *Sum_v_100* and making the average *M_v* into an integer.

More specifically, the average *M_v* is calculated in consideration of the weights given to the plurality of half-pixels, as follows:

$$M\_v = (Sum\_v\_100)/(a+b+c+d+e+f) \tag{3}$$

Next, the average *M_v* is made into an integer by rounding up, rounding down, or rounding off. Rounding off randomizes and minimizes errors. The integer is the vertical average *integer_M_v.*

2-(e): The value of quarter-pixel 100 is obtained by calculating the average of the horizontal sum *Sum_h_100* and the vertical sum *Sum_v_100* and then making the average into an integer, using the following equation:

$$quarter\text{-}pixel\ 100 = integer[(integer\_M\_h + integer\_m\_v)/2] \tag{4}$$

wherein integer[ ] denotes an operation of generating an integer based on the value calculated by the formula enclosed inside the brackets, [ ]. In this case, rounding down, rounding up, or rounding off may be used. Rounding off randomizes and minimizes errors.

Alternatively, it is possible to obtain the same result even if Method 2 is carried out in the order of 2-(c), 2-(d), 2-(a), 2- (b) , and 2- (e) .

Also, the value of another interpolation pixel, i.e., a one eighth pixel or a one sixteenth pixel, may be computed by the above method of calculating quarter-pixel 100.

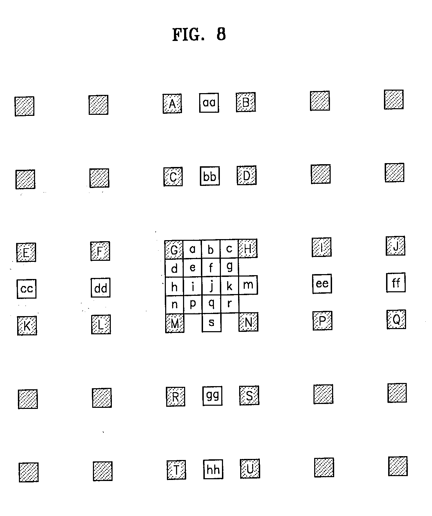

Figure 8 is a diagram illustrating interpolation performed by an interpolation unit according to another embodiment of the present invention. In detail, Figure 8 shows pixels which constitute a predetermined motion vector compensation block or a portion thereof. Here, shaded boxes and empty boxes denote integer pixels and interpolation pixels, respectively. In the interpolation according to this embodiment, a plurality of pixels, i.e., six pixels, are used to calculate the value of an interpolation pixel. Also, weights are given to the pixels, respectively. A 6-tap filter having 6 tap values is adopted when giving weights to the pixels. The tap values are weights given to pixels selected for interpolation. In this embodiment, tap values are determined to be (1, -5, 20, 20, -5, 1). The number of pixels and weights, i.e., tap values, are not limited.

Half-Pixel *b*:

The value of half-pixel *b* is computed using six interger pixels *E, F, G, H, I,* and *J* adjacent to half-pixel *b* in the horizontal direction. When interger pixels *E, F, G, H, I,* and *J* are input to the aforementioned 6-tap filter, the horizontal sum *Sum_h_b* thereof is output from the 6-tap filter. The horizontal sum *Sum_h_b* is calculated by the following equation:

$$Sum\_h\_b = (E - 5F + 20G + 20H - 5I + J) \qquad (5)$$

Next, the value of half-pixel *b* is calculated by adding 16 to the horizontal sum *Sum_h_b*, dividing the addition result by 32, making the division result into an integer, and adjusting the range of the integer, as expressed in the following equation:

$$b = \text{Clip1}[(Sum\_h\_b + 16)\text{>>}5] \qquad (6),$$

wherein adding 16 to the horizontal sum *Sum_h_b* results in the rounding off of the horizontal sum *Sum_h_b* into an integer. >>5 denotes an operation of dividing the obtained integer by 32(=$2^5$) and omitting places following a decimal point in the division result. The reason for the omission is that the sum of the tap values of the 6-tap filter is 32, and the average of the pixel values needs to be divided by 32. *Clip1()* denotes an operation of mapping the integer obtained by the formula *Sum_h_b+16* to fall within the range of the original pixels, i.e., the integer pixels. For instance, if the integer pixels fall within a range between 0 and 255, *Clip1()* maps the obtained average into a predetermined value within the same range when the average does not fall within the same range.

Half-Pixel *h*:

The value of half-pixel *h* is calculated using six integer pixels *A, C, G, M, R,* and *T* adjacent to half-pixel *h* in the vertical direction. When integer pixels *A, C, G, M, R,* and *T* are input to the aforementioned 6-tap filter, the vertical sum *Sum_v_h* thereof is output from the 6-tap filter. The vertical sum *Sum_v_h* is computed by the following equation:

$$Sum\_v\_h = (A - 5C + 20G + 20M - 5R + T) \qquad (7)$$

Next, the value of half-pixel *h* is calculated by adding 16 to the vertical sum *Sum_v_h,* dividing the addition result by 32, rounding off the division result into an integer, and adjusting the range of the integer, as expressed in following equation 8:

$$h = \text{Clip1}[(Sum\_v\_h + 16)\text{>>}5] \qquad (8)$$

wherein adding 16 to the vertical sum *Sum_v_h* results in the rounding off of the vertical sum *Sum_v_h* into an integer. >>5 denotes an operation of dividing the obtained integer by 32 (=$2^5$) and omitting places following a decimal point in the division result. The reason for leaving off the places after the decimal point is that the sum of the tap values of the 6-tap filter is 32, that is, 32 pixel values are added together, and the average of the pixel values needs to be divided by 32. *Clip1()* denotes a command of mapping the integer obtained by the formula *Sum_v_h+16* to fall within the range of the original pixels, i.e., the interger pixels. For instance, if the integer pixels fall within a range between 0 and 255, *Clip1()* maps the obtained average into a predetermined value within the same range when the average does not fall within the same range.

Half-Pixel *s*:

The value of half-pixel s can also be calculated using the method of calculating the value of half-pixel *b*, as expressed in the following equations:

$$Sum\_h\_s = (K - 5L + 20M + 20N - 5P + Q)$$

$$s = \text{Clip1}[(Sum\_h\_s + 16) >> 5] \quad (9)$$

Half-Pixel *m*:

The value of half-pixel m can also be calculated using the method of calculating the value of half-pixel *h*, as expressed in the following equations:

$$Sum\_v\_m = (B - 5D + 20H + 20N - 5S + U)$$

$$m = \text{Clip1}[(Sum\_h\_m + 16) >> 5] \quad (10)$$

Quarter-Pixel *j*:

The value of quarter-pixel *j* is calculated by using one of the following methods, and six half-pixels *cc, dd, h, m, ee,* and *ff* adjacent to quarter-pixel *j* in the horizontal direction, and six half-pixels *aa, bb, b, s, gg,* and *hh* adjacent to quarter-pixel *j* in the vertical direction. That is, a total of twelve half-pixels are used.

Method 3:

First, the values of six half-pixels cc, dd, h, m, ee, and ff are input to the aforementioned 6-tap filter, the horizontal sum *Sum_h_j* thereof is output from the 6-tap filter, as expressed in the following equation:

$$Sum\_h\_j = (cc - 5dd + 20h + 20m - 5ee + ff) \quad (11)$$

Next, the values of six half-pixels aa, bb, b, s, gg, and *hh* are input to the 6-tap filter, the vertical sum *Sum_v_j* thereof is output from the 6-tap filter, as expressed in the following equation:

$$Sum\_v\_j = (aa - 5bb + 20b + 20s - 5gg + hh) \quad (12)$$

Next, the value of quarter-pixel *j* is obtained by calculating the average of the horizontal sum *Sum_h_j* and the vertical sum *Sum_v_j,* making the average into an integer, and adjusting the range of the integer, using the following equation:

$$j = \text{Clip1}[(Sum\_h\_j + Sum\_v\_j + 32) >> 6) \quad (13)$$

wherein $(Sum\_h\_j + Sum\_v\_j + 32) >> 6$ is an operation of making $Sum\_h\_j + Sum\_v\_j$ into an integer by adding 32 to $Sum\_h\_j + Sum\_v\_j$, dividing the addition result by 64, and discarding digits following a decimal point of the division result. Here, adding 32 to $Sum\_h\_j + Sum\_v\_j$ results in the rounding off of the $Sum\_h\_j + Sum\_v\_j$ into an integer. *Clip1()* is an operation of mapping the obtained integer using *(Sum_h_j + Sum_v_j + 32)>>6* into a value within the range of the values of the original integer pixels. For instance, if the values of the original pixels fall within a range between 0 and 255, *Clip1()* maps the obtained integer into a predetermined value within the same range when the integer does not fall within the same range.

Method 4:

First, the values of six half-pixels cc, dd, h, m, ee, and ff, adjacent to quarter-pixel j in the horizontal direction, are input to the aforementioned 6-tap filter to obtain the horizontal sum $Sum\_h\_j$ thereof. Next, the horizontal average $M\_h\_j$ of the half-pixels is obtained by calculating the average of the horizontal sum $Sum\_h\_j$ and making the average into an integer, as expressed in the following equations:

$$Sum\_h\_j = (cc - 5dd + 20h + 20m - 5ee + ff)$$

$$M\_h\_j = \text{Clip1}[(Sum\_h\_j + 16) >> 5] \tag{14}$$

Next, the values of six half-pixels $aa, bb, b, s, gg,$ and $hh$, adjacent to quarter-pixel j in the vertical direction, are input to the aforementioned 6-tap filter so as to obtain the vertical sum $Sum\_v\_j$ thereof. Next, the vertical average $M\_v\_j$ of the half-pixels is obtained by calculating the average of the vertical sum $Sum\_v\_j$ and making the average into an integer, as expressed in the following equations:

$$Sum\_v\_j = (aa - 5bb + 20b + 20s - 5g + hh)$$

$$M\_v\_j = \text{Clip1}[(Sum\_v\_j + 16) >> 5] \tag{15}$$

Next, the value of quarter-pixel $j$ is obtained by calculating the average of the horizontal average $M\_h\_j$ and the vertical average $M\_v\_j$ and making the average into an integer, using the following equation:

$$j = \text{Clip1}[(M\_h\_j + M\_v\_j + 1) >> 1] \tag{16}$$

The value of another quarter-pixel, a one eighth pixel, or a one sixteenth pixel may be calculated using the method of calculating the value of quarter-pixel $j$.

As described above, an interpolation method and apparatus according to the present invention uses an interpolation algorithm having consistency in motion vector compensation, thereby increasing the efficiency of motion vector compensation.

The aforementioned interpolation may be embodied as a computer program that can be executed by a computer or processor. Codes and code segments, which constitute the computer program, can be easily generated by a person of ordinary skill in the art. When the program is read and executed by a computer, the interpolation is realized. The program may be stored in a computer readable medium, including software, firmware, hardware, other media suitable for the present invention, including but not limited to magnetic recording medium, an optical recording medium, or a carrier wave medium, or some combination thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

**1.** An interpolation method comprising:

calculating a horizontal sum of values of a first plurality of half-pixels adjacent to or near a predetermined quarter-pixel in a horizontal direction, by giving predetermined weights to the half-pixels of the first plurality of half-pixels, and adding the weighted half-pixels of the first plurality of half-pixels;

calculating a vertical sum of values of a second plurality of half-pixels adjacent to or near the quarter-pixel in a vertical direction, by giving predetermined weights to the half-pixels of the second plurality of half-pixels, and adding the weighted half-pixels of the second plurality of half-pixels;

calculating an integer value of the quarter-pixel based on the vertical sum and the horizontal sum; and

outputting as an interpolated value the integer value of the quarter-pixel.

2. The interpolation method of claim 1, wherein a total number of the half-pixels used when calculating each of the vertical sum and the horizontal sum is an even number.

3. The interpolation method of claim 1 or 2, wherein the sum of the given predetermined weights is $2^n$, n being the number of predetermined weight values used.

4. The interpolation method of claim 1, 2 or 3, wherein in calculating the vertical sum and the horizontal sum, the first plurality of half-pixels and the second plurality of half-pixels is each input to a tap filter having the predetermined weights as tap values.

5. The interpolation method of claim 4, wherein the sum of the predetermined weights is $2^n$, n being the number of predetermined weight values used.

6. The interpolation method of claim 5, wherein six half-pixels are input to a 6-tap filter which has tap values of (1, -5, 20, 20, -5, 1).

7. The interpolation method of any preceding claim, wherein the integer value of the quarter-pixel is obtained by calculating an average of the vertical sum and the horizontal sum, and rounding off the average to generate an integer.

8. The interpolation method of claim 7, wherein the integer value of the quarter-pixel is calculated using the following equation:

$$average = (horizontal\ sum + vertical\ sum) / [2*(a + b + c + d + e + f)]$$

wherein *a, b, c, d, e,* and *f* are tap values of a 6-tap filter, the tap values being the predetermined weights.

9. The interpolation method of claim 7, wherein in calculating the integer value of the quarter-pixel, the following equations are used:

$$quarter\text{-}pixel = integer[(integer\_M\_h + integer\_M\_v)/2]$$

$$integer\_M\_h = integer\ [horizontal\ sum/(a+b+c+d+e+f)]$$

$$integer\_M\_v = integer\ [vertical\ sum/(a+b+c+d+e+f)]$$

wherein *a, b, c, d, e,* and *f* are tap values of a 6-tap filter, and integer[ ] denotes an operation of making into an integer a value calculated using the formula expressed inside the brackets, [ ].

10. An interpolation method comprising:

calculating a horizontal sum of values of a first plurality of half-pixels adjacent to or near a predetermined quarter-pixel in a horizontal direction, by giving predetermined weights to the half-pixels of the first plurality of half-pixels, and adding the weighted half-pixels of the first plurality of half-pixels;

calculating a horizontal average of the half-pixels of the first plurality of half-pixels based on the horizontal sum, and making the average into an integer;

calculating a vertical sum of values of a second plurality of half-pixels adjacent to or near the quarter-pixel in the vertical direction, by giving predetermined weights to the half-pixels of the second plurality of half-pixels, and adding the weighted half-pixels of the second plurality of half-pixels;

calculating a vertical average of the half-pixels of the second plurality of half-pixels based on the vertical sum, and making the average into an integer; and

calculating the value of the quarter-pixel, by calculating an average of the horizontal average and the vertical average, and making their average into an integer.

**11.** The interpolation method of claim 10, wherein in calculating the horizontal sum and the vertical sum, the first plurality of half-pixels and the second plurality of half-pixels is each input to a tap filter having the predetermined weights as tap values.

**12.** The interpolation method of claim 11, wherein in calculating the horizontal sum and the vertical sum, six half-pixels are input to a 6-tap filter having tap values of (1, -5, 20, 20, -5, 1).

**13.** The interpolation method of claim 10, 11 or 12, wherein in calculating the integer value of the quarter-pixel, the following equations are used:

$$quarter\text{-}pixel = \text{integer}[(integer\_M\_h + integer\_M\_v)/2]$$

$$integer\_M\_h = \text{integer}[horizontal\ sum/(a+b+c+d+e+f)]$$

$$integer\_M\_v = \text{integer}[vertical\ sum/(a+b+c+d+e+f)]$$

wherein *a, b, c, d, e,* and *f* are the tap values of a 6-tap filter, and *integer[ ]* denotes an operation of making into an integer a value calculated using the formula enclosed inside the brackets, [ ].

**14.** The interpolation method of claim 10, 11 or 12, wherein in calculating the value of the quarter-pixel, the following equations are used:

$$quarter\ pixel = \text{Clip1}[(M\_h + M\_v + 1)>>1]$$

$$M\_h = \text{Clip1}[(Sum\_h + 16)>>5]$$

$$M\_v = \text{Clip1}[(Sum\_v + 16)>>5]$$

wherein Clip1 is an operation that maps the obtained integer into a predetermined value within the same range as the values of the original integer pixels, and >>x is an operation that divides the term preceding it by $2^x$.

**15.** A motion compensation apparatus comprising:

an interpolation unit (5) configured to calculate a horizontal sum, by giving weights to a plurality of first half-pixels adjacent to or near a predetermined quarter-pixel in a horizontal direction and to add the weighted half-pixels of the first plurality of half-pixels, to calculate a vertical sum by giving weights to a plurality of second half-pixels adjacent to or near the quarter-pixel in a vertical direction and to add the weighted half-pixels of the second plurality of half-pixels, and to calculate an integer value of the quarter-pixel based on the vertical sum and the horizontal sum; and

a motion compensator (500) configured to perform motion vector compensation on a pixel block that includes the quarter-pixel interpolated by the interpolation unit (5) and to output a result of the motion vector compensation.

16. The motion compensation apparatus of claim 15, wherein the interpolation unit (5) is configured to input the first plurality of half-pixels and the second plurality of half-pixels to a tap filter having the weights as tap values.

17. The motion compensation apparatus of claim 15 or 16, wherein the interpolation unit (5) is configured to input six half-pixels of at least one of the first plurality of half-pixels and the second plurality of half-pixels to a 6-tap filter having tap values of (1, -5, 20, 20, -5, 1).

18. The motion compensation apparatus of claim 15, 16 or 17, wherein the interpolation unit (5) is configured to calculate an average of the vertical sum and the horizontal sum, to round off the average into an integer, and to determine the integer as the value of the quarter-pixel.

19. The motion compensation apparatus of claim 15, 16, 17 or 18, wherein the interpolation unit (5) is configured to calculate an average of the vertical sum and the horizontal sum based on the following equation:

$$average = (horizontal\ sum + vertical\ sum) / [2*(a + b + c + d + e + f)]$$

wherein $a, b, c, d, e,$ and $f$ are tap values of a 6-tap filter.

20. The motion compensation apparatus of claim 15, 16, 17 or 18, wherein the interpolation unit (5) is configured to calculate the quarter-pixel based on the following equations:

$$quarter\text{-}pixel = integer[(integer\_M\_h + integer\_M\_v)/2]$$

$$integer\_M\_h = integer[horizontal\ sum/(a+b+c+d+e+f)]$$

$$integer\_M\_v = integer[vertical\ sum/(a+b+c+d+e+f)]$$

wherein $a, b, c, d, e,$ and $f$ are tap values of a 6-tap filter, and $integer[\ ]$ denotes an operation of making into an integer the value calculated using the formula enclosed inside brackets, [ ] .

21. A motion compensation apparatus comprising:

an interpolation unit (5) configured to calculate a horizontal sum of a first plurality of half-pixels adjacent to or near a predetermined quarter-pixel in a horizontal direction, by giving weights to half-pixels of the first plurality of half-pixels and adding the weighted half-pixels of the first plurality of half-pixels, to calculate a horizontal average of the first plurality of half-pixels based on the horizontal sum, to make the horizontal average into an integer, to calculate a vertical sum of a second plurality of half-pixels adjacent to or near the quarter-pixel in a vertical direction, by giving weights to half-pixels of the second plurality of half-pixels and adding the weighted half-pixels of the second plurality of half-pixels, to calculate a vertical average of the half-pixels of the second plurality of half-pixels based on the vertical sum, to make the vertical average into an integer, to calculate a quarter-pixel average, based on an average of the vertical average and the horizontal average and to make the quarter-pixel average into an integer, and to determine the integer as the interpolated value of the quarter-pixel; and

a motion compensator (500) configured to perform motion vector compensation on a pixel block containing a quarter-pixel interpolated by the interpolation unit (5), and to output a result of the motion vector compensation.

**22.** The motion compensation apparatus of claim 21, wherein the interpolation unit (5) is further configured to input the first plurality of half-pixels and the second plurality of half-pixels to a tap filter having the weights as tap values.

**23.** The motion compensation apparatus of claim 21 or 22, wherein the interpolation unit (5) is further configured to calculate the following equations:

$$quarter\ pixel = Clip1[(M\_h + M\_v + 1) >> 1]$$

$$M\_h = Clip1[(Sum\_h + 16) >> 5]$$

$$M\_v = Clip1[(Sum\_v + 16) >> 5]$$

wherein Clip1 is an operation that maps the obtained integer into a predetermined value within the same range as the values of the original integer pixels, and >>x is an operation that divides the term preceding it by $2^x$.

**24.** An encoding apparatus comprising:

an interpolation unit (5) configured to calculate a horizontal sum of a first plurality of half-pixels adjacent to or near a predetermined quarter-pixel in a horizontal direction, by giving weights to half-pixels of the first plurality of half-pixels and adding the weighted half-pixels of the first plurality of half-pixels, to calculate a horizontal average of the first plurality of half-pixels based on the horizontal sum, to make the horizontal average into an integer, to calculate a vertical sum of a second plurality of half-pixels adjacent to or near the quarter-pixel in the vertical direction, by giving weights to half-pixels of the second plurality of half-pixels and adding the weighted half-pixels of the second plurality of half-pixels, to calculate a vertical average of the second plurality of half-pixels based on the vertical sum, to make the vertical average into an integer, to calculate the quarter-pixel average of the vertical average and the horizontal average, to makes the quarter-pixel average into an integer, and to determine the integer as the interpolated value of the quarter-pixel; and

a motion compensator (500) configured to perform motion vector compensation on a pixel block including the quarter-pixel interpolated by the interpolation unit (5) and to output a result of the motion vector compensation.

**25.** The encoding apparatus of claim 24, wherein the interpolation unit (5) is configured to input the first plurality of half-pixels and the second plurality of half-pixels to a tap filter having the weights as tap values.

**26.** The encoding apparatus of claim 24 or 25, wherein the interpolation unit (5) calculates the quarter-pixel based on following equations:

$$quarter\ pixel = Clip1[(M\_h + M\_v + 1) >> 1]$$

$$M\_h = Clip1[(Sum\_h + 16) >> 5]$$

$$M\_v = Clip1[(Sum\_v + 16) >> 5]$$

wherein Clip1 is an operation that maps the obtained integer into a predetermined value within the same range as the values of the original integer pixels, and >>x is an operation that divides the term preceding it by $2^x$.

**27.** A decoding apparatus comprising:

an interpolation unit (5) configured to calculate a horizontal sum of a first plurality of half-pixels adjacent to or near a predetermined quarter-pixel in a horizontal direction, by giving weights to half-pixels of the first plurality of half-pixels and adding the weighted half-pixels of the first plurality of half-pixels, to calculate a horizontal average of the first plurality of half-pixels based on the horizontal sum, to make the horizontal average into an integer, to calculate a vertical sum of a second plurality of half-pixels adjacent to or near the quarter-pixel in a vertical direction, by giving weights to half-pixels of the second plurality of half-pixels and adding the weighted half-pixels of the second plurality of half-pixels, to calculate a vertical average of the second plurality of half-pixels based on the vertical sum, to make the vertical average into an integer, to calculate the quarter-pixel average of the vertical average and horizontal averages, to makes the quarter-pixel average into an integer, and to provide the integer as the value of the interpolated quarter-pixel; and

a motion compensator (510) configured to perform motion vector compensation on a pixel block including the quarter-pixel interpolated by the interpolation unit (5), and to output the motion vector compensation.

28. The decoding apparatus of claim 27, wherein the interpolation unit (5) is further configured to input the first plurality of half-pixels and the second plurality of half-pixels to a tap filter having the weights as tap values.

29. The decoding apparatus of claim 27 or 28, wherein the interpolation unit (5) calculates the quarter-pixel based on the following equations:

$$quarter\ pixel = \text{Clip1}[(M\_h + M\_v + 1)>>1]$$

$$M\_h = \text{Clip1}[(Sum\_h + 16)>>5]$$

$$M\_v = \text{Clip1}[(Sum\_v + 16)>>5]$$

wherein Clip1 is an operation that maps the obtained integer into a predetermined value within the same range as the values of the original integer pixels, and >>x is an operation that divides the term preceding it by $2^x$.

FIG. 1

|  |  |  |
|:---:|:---:|:---:|
| 1 | 5 | 2 |
| 6 | 9 | 7 |
| 3 | 8 | 4 |

▨ — ORIGINAL PEL

☐ — INTERPOLATION PEL

## FIG. 2

## FIG. 3

**FIG. 4**

FIG. 5

I₀    B₁    B₂    B₃    P₄    B₅    B₆    B₇    P₈

FIG. 6

MB

FIG. 7

## FIG. 8